# EUROPÄISCHE PATENTSCHRIFT

(11) **EP 2 548 770 B1**
(45) Veröffentlichungstag und Bekanntmachung des Hinweises auf die Patenterteilung: **15.01.2014**
(21) Anmeldenummer: 11075173.2
(22) Anmeldetag: 21.07.2011
(51) Int. Cl.: B60R 1/074

(54) **Antriebsanordnung fpür einen aussenrückspiegel eines Fahrzeugs**
Drive assembly for an external rear mirror in a vehicle
Agencement d'entraînement pour un rétroviseur extérieur d'un véhicule

(43) Veröffentlichungstag der Anmeldung: 23.01.2013
(73) Patentinhaber: Magna Auteca AG, 8160 Weiz (AT)
(72) Erfinder: Fuchs, Reinhard, 8212 Pischelsdorf (AT); Palvoelgyi, Martin, 8010 Graz (AT)
(74) Vertreter: Rausch, Gabriele

(56) Entgegenhaltungen:
- EP-A1- 0 931 699
- WO-A1-97/43144
- WO-A1-2005/110812
- DE-A1- 3 936 742

## Beschreibung

Die Erfindung betrifft eine Antriebsanordnung für einen Außenrückspiegel eines Fahrzeugs zum Bewegen eines Spiegelkopfes relativ zu einem mit dem Fahrzeug verbundenen Spiegelfuß nach dem Oberbegriff des Hauptanspruchs,

Im Stand der Technik ist eine Vielzahl von Antriebsanordnungen für Außenrückspiegel eines Kraftfahrzeugs bekannt, mittels denen ein das Spiegelglas tragender Spiegelkopf aus einer Fahrstellung, bei der der Außenspiegel zu der Mittelachse des Kraftfahrzeugs ausgeklappt ist, und einer Park- bzw. Beiklappstellung, bei der der Spiegelkopf in Richtung der Mittelachse des Fahrzeugs bewegt wird und umgekehrt. Üblicherweise befindet sich zwischen dem Spiegelkopf und dem Spiegelfuß ein Spalt, der während der Fahrt Windgeräusche erzeugen kann. Um dieses Geräusch zu verhindern, wird teilweise dazu übergegangen, diesen Spalt mittels einer Dichtung abzudichten. Dies führt jedoch aufgrund der höheren Reibung zu einem höheren Beiklappmoment und damit zu einer höheren Stromaufnahme des Antriebsmotors. Außerdem führt die wiederholte Relativbewegung zu einem verstärkten Verschleiß und damit einer geringeren Lebensdauer der Dichtung.

In der EP 0 931 699 A1 wird zur Lösung dieses Problems vorgeschlagen, den Spiegelkopf bei der Bewegung von der Fahrstellung in die Parkstellung relativ zum Spiegelfuß anzuheben, wobei das Anheben mittels zweier jeweils fest mit dem Spiegelfuß und dem Spiegelkopf verbundener und um die Drehachse angeordneter Ringe realisiert wird, die jeweils Rampen und Nuten aufweisen, die in der Fahrstellung ineinandergreifen und die beim Drehen in die Parkstellung aufeinander gleiten und dabei den Kopf vom Spiegelfuß anheben.

Die DE 3936742 A zeigt eine Antriebsanordnung für ein Außenrückspiegel eines Fahrzeugs nach dem Oberbegriff des Anspruchs 1.

Der Erfindung liegt die Aufgabe zugrunde, eine Antriebsanordnung für einen Außenrückspiegel zu schaffen, mit dem ein kontrolliertes und zu Beginn des Beiklappens möglichst rasches Abheben des Spiegelkopfes vom Spiegelfuß bzw. von der am Spiegelfuß angebrachten Dichtung möglich ist, wobei das benötigte Antriebsmoment verringert werden soll.

Diese Aufgabe wird erfindungsgemäß durch die kennzeichnenden Merkmale des Hauptanspruchs in Verbindung mit den Merkmalen des Oberbegriffs gelöst. Durch die in den Unteransprüchen angegebenen Maßnahmen sind vorteilhafte Weiterbildungen und Verbesserungen möglich.

Dadurch, dass bei einer Antriebsanordnung für einen Außenrückspiegel zum Bewegen eines Spiegelkopfes re-lativ zu einem feststehenden Spiegelfuß aus einer Fahrstellung in eine Parkstellung und umgekehrt mittels eines Antriebs, der zum Ausführen der Bewegung zwischen einem feststehenden Teil und einem mit dem Spiegelkopf verbundenen beweglichen Teil durch einen Elektromotor und einem mit diesem in Wirkverbindung stehendes Zahnrad Mittel zum Abheben des beweglichen Teils von dem feststehenden Teil als mindestens eine auf der Stirnfläche des Zahnrads angeordnete Rastvertiefung und mindestens als ein Gleitelement ausgebildet sind, wobei das Gleitelement an dem beweglichen Teil schwenkbar angeordnet ist und einen Rastvorsprung für den Eingriff in die Rastvertiefung und eine Gleitfläche zum relativen Bewegen auf der Stirnfläche aufweist, ist es möglich, den Spiegelkopf schnell und kontrolliert von dem Spiegelfuß abzuheben und die Reibung zwischen dem beweglichen und dem feststehenden Teil bzw. Spiegelkopf und Spiegelfuß zu verringern und damit die Dichtung vor übermäßigem Verschleiß zu schützen, wodurch die Belastung auf das Getriebe und den Motor des Antriebs vermindert wird. Dabei ist zu bemerken, dass die Mittel zum Abheben des beweglichen Teils vom feststehenden Teil nicht mit den Maßnahmen der sogenannten "Notausrastung" zu vergleichen und zu verwechseln sind, die eine Trennung der beiden Teile und ein Wegklappen dann vorsehen, wenn von außen eine Krafteinwirkung auf den Spiegelkopf geschieht.

Darüber hinaus kann erfindungsgemäß bei der Antriebsanordnung die Fahrposition genau definiert und erkannt werden, ohne dass zusätzliche Teile notwendig sind. Durch die schwenkbare Anordnung des Gleitelements wird ermöglicht, dass der Rastvorsprung aus der Rastvertiefung ohne zu große Belastung des Antriebs bzw. des Motors und zugeordneten Getriebes außer Eingriff kommen kann. Ein weiterer Vorteil ist, dass der üblicherweise vorgesehene Raststift zur Festlegung der Fahrposition gespart werden kann.

In besonders bevorzugter Weise ist das mindestens eine Gleitelement als am beweglichen Teil mittels einer Lagerachse schwenkbar befestigter Hebel ausgebildet, derart, dass er zur Festlegung des Spiegels in der Fahrstellung mit dem Rastvorsprung in die Rastvertiefung eingreift und er zum Abheben des beweglichen Teils von dem feststehenden Teil, bei dem der Antrieb den beweglichen Teil um das Zahnrad dreht, um die Lagerachse um einen vorgegebenen Winkel schwenkt und der Rastvorsprung aus der Rastvertiefung herausfährt. Der Hebel hat somit zwei Aufgaben, nämlich einerseits den Antrieb und damit den beweglichen Teil zu Beginn des Beiklappens anzuheben und andererseits dient er als begrenzendes Element, um beim Ausklappvorgang den Spiegelkopf in Fahrposition anzuhalten.

In vorteilhafter Weise weist der bewegliche Teil einen die Stirnfläche des Zahnrads übergreifenden Träger und eine Druckfeder zum Aufbringen einer Vorspannkraft auf den Träger und das Zahnrad auf, wobei beim Herausfahren des Rastvorsprungs aus der Rastvertiefung des Zahnrads und Abheben des beweglichen Teils vom feststehenden Teil die Druckfeder zusammengedrückt und ihre Federkraft erhöht wird. In diesem Ausführungsbeispiel übernimmt die Druckfeder zwei Aufgaben, einerseits drückt sie in bekannter Weise den Spiegelkopf gegen den Spiegelfuß und andererseits bringt sie die notwendige Kraft für das saubere Einrasten des Rastvorsprungs in die Rastvertiefung auf, so dass kein zusätzliches Federelement notwendig ist.

In bevorzugter Weise weist das als Hebel ausgebildete Gleitelement auf seiner der Stirnfläche des Zahnrads zugewandten Seite Gleitflächen auf, die nach Herausfahren des Rastvorsprungs aus der Rastvertiefung auf der Stirnfläche des Zahnrads zum Überführen des Spiegels in die Parkstellung gleiten.

Ein bevorzugtes Ausführungsbeispiel ist derart vorgesehen, dass das als Hebel ausgebildete Gleitelement auf seiner zum Zahnrad entgegengesetzten Seite eine Anschlagfläche für das Abstützen an dem beweglichen Teil aufweist, wenn sich der Rastvorsprung in der Rastvertiefung befindet. Dadurch, dass die Anschlagfläche in der Fahrposition in Eingriff mit dem Träger des beweglichen Teils ist, kann der Kraftschluss zwischen dem Rastvorsprung des Gleitelements und der Rastvertiefung in der Stirnfläche des Zahnrads so angepasst werden, dass beim Herausfahren des Rastvorsprungs aus der Rastvertiefung kein zu großes Anfahrmoment überwunden werden muss.

Besonders vorteilhaft ist, dass durch Wahl der Anordnung der Position der Lagerachse in Bezug auf die Rastvertiefung bzw. in diese eingreifende Nase und die Gleitfläche des als Hebel ausgebildeten Gleitelements die Abhebehöhe anpassbar ist. Beispielsweise ergibt sich durch eine gewählte Anordnung der Lagerachse annähernd mittig zwischen Rastvorsprung und der Gleitfläche des Hebels eine Übersetzung, bei der sich die Lagerachse annähernd halb so viel hebt, wie der Hebelrastvorsprung. Dadurch ergibt sich trotz geringer Hebelhöhe eine ausreichend große Überdeckung bei den Rastflächen einerseits des Vorsprungs und andererseits der Rastvertiefung. Umgekehrt verhält es sich bei den wirkenden Kräften. Da der Hebel bzw. das Gleitelement sich an der Gleitfläche abstützt, wirkt auf den Rastvorsprung nur annähernd die halbe Federkraft. Durch diese Anordnung ist es daher trotz eines relativ steilen Rampenwinkels der Rastvertiefung möglich, das benötigte Antriebsmoment gering zu halten.

In vorteilhafter Weise ist die mindestens eine Rastvertiefung im Wesentlichen V-förmig ausgebildet, wobei eine Fläche des V-förmigen Profils eine als Anschlag dienende Rastfläche und die andere eine Rampenfläche für das Herausfahren des Rastvorsprungs aus der Rastvertiefung ist, wobei der Winkel zwischen Rastfläche und Normalen kleiner als der Winkel zwischen Normalen und Rampenfläche ist. Durch die Wahl eines solchen Profils kann sich einerseits der Rastvorsprung sicher an der als Anschlag dienenden Rastfläche abstützen und andererseits ist ein schnelles Herausfahren über die Rampenfläche möglich. Ein besonders vorteilhaftes Ausführungsbeispiel wird dadurch gegeben, dass in der Stirnfläche des Zahnrades drei Rastvorsprünge angeordnet sind und dass drei als Hebel ausgebildete Gleitelemente schwenkbar am beweglichen Teil gelagert sind. Durch die jeweils drei Elemente werden die Bewegungen sicher zwischen dem beweglichen und dem feststehenden Teil übertragen.

Ein Ausführungsbeispiel ist in der Zeichnung dargestellt und wird in der nachfolgenden Beschreibung näher erläutert. Es zeigen
- Fig. 1.: eine perspektivische Ansicht eines vereinfachten Aufbaus eines Fahrzeugaußenspiegels in Explosionsdarstellung, bei dem der erfindungsgemäße Antrieb eingesetzt wird,
- Fig. 2.: eine perspektivische Ansicht der erfindungsgemäßen Antriebsanordnung in Explosionsdarstellung,
- Fig. 3.: eine Schnittansicht durch die erfindungsgemäße Antriebsanordnung gemäß den Schnittlinien A-A,
- Fig. 4.: ein bei der erfindungsgemäßen Antriebsanordnung eingesetztes Antriebszahnrad in perspektivischer Ansicht,
- Fig. 5.: die Seitenansicht eines in der erfindungsgemäßen Antriebsanordnung verwendeten und als Hebel ausgebildeten Gleitelements in zwei verschiedenen Stellungen,
- Fig. 6.: einen perspektivischen Teilschnitt der erfindungsgemäßen Antriebsanordnung in Fahrstellung,
- Fig. 7.: ein Schema der erfindungsgemäßen Antriebsanordnung in Fahrstellung,
- Fig. 8.: einen perspektivischen Teilschnitt der erfindungsgemäßen Antriebsanordnung beim Beiklappen und
- Fig. 9.: ein Schema der erfindungsgemäßen Antriebsanordnung beim Beiklappen.

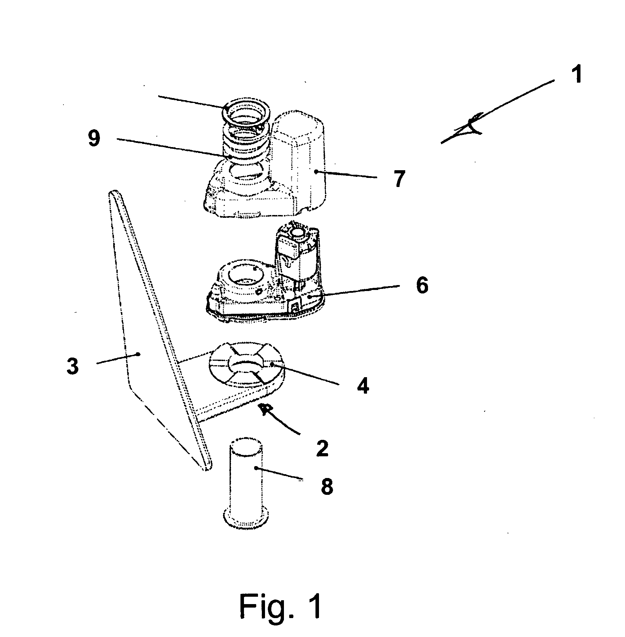

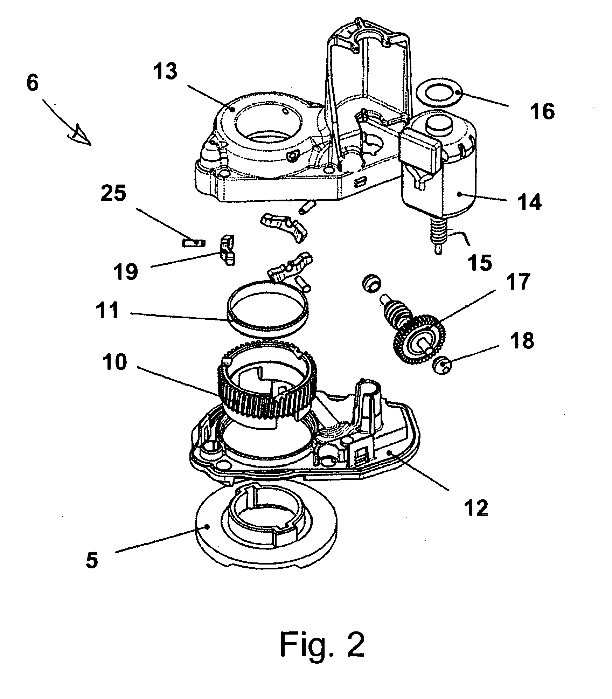

Der in Fig. 1 in vereinfachter Form dargestellte Fahrzeugaußenspiegel 1 weist einen Spiegelfuß 2 auf, der über ein so genanntes Spiegeldreieck 3 an der Karosserie eines Kraftfahrzeugs befestigt ist. Der Spiegelfuß 2 besitzt eine Rastkontur 4, die mit einer Rastscheibe 5 (siehe Fig. 2) mit korrespondierender Kontur eines Spiegelbeiklappantriebs 6 im Eingriff ist. Über diese Rastkonturen kann der Spiegelkopf bei starken Stößen durch Krafteinwirkung von außen "manuell" beiklappen. Auf den Spiegelfuß 2 wird ein tragender Teil 7, an dem der Spiegelkopf befestigt ist, gesetzt, der den Antrieb 6 übergreift. Der tragende Teil des Spiegelkopfes und der Spiegelfuß 2 sowie der Antrieb 6 werden von einem Rohrniet 8 durchgriffen und werden über eine Druckfeder 9, die auf den Rohrniet 8 unter Spannung aufgesetzt ist, miteinander verbunden, da die Druckfeder 9 den tragenden Teil 7 des Spiegelkopfes und den Spiegelfuß aneinanderdrückt. Die zentrale Bohrung des Rohrniets 8 wird als Durchführung für Leitungen zu elektrischen Komponenten im Spiegelkopf genutzt. Der elektrische Beiklappantrieb ist bei der beschriebenen Anordnung im tragenden Teil des Spiegelkopfes eingeschraubt.

In Fig. 2 ist der elektrische Beiklappantrieb 6 der Fig. 1 in einer Explosionsdarstellung genauer gezeigt. Der Antrieb 6 umfasst einen feststehenden Teil und einen beweglichen Teil, wobei der feststehende Teil die Rastscheibe 5, ein Abtriebszahnrad 10 und ein Gleitlager 11 aufweist. Wie erwähnt, besitzt die Rastscheibe 5 auf der Unterseite eine Kontur aus Erhöhungen und Vertiefungen, die in die entsprechende Rastkontur 4 am Spiegelfuß 2 passt und somit eine begrenzte Drehmomentenübertragung zwischen beiden Teilen ermöglicht. Das übertragbare Moment wird über die Form der Konturen über die Vorspannung der axialen Druckfeder 9 entsprechend dem Prinzip einer Sicherheitsklauenkupplung bestimmt.

Alle weiteren in Zusammenhang mit Fig. 2 im Folgenden beschriebenen Teile gehören zum beweglichen Teil des Beiklappantriebs 6. Diese Teile sind in einem Gehäuse aufgenommen, das von einem Deckel 12 und von einem Träger 13 gebildet wird und das einen Durchgriff für einen Ansatz der Rastscheibe 5 aufweist, auf dem formschlüssig das Abtriebszahnrad 10 sitzt, das somit auch von dem Gehäuse aus Deckel 12 und Träger 13 geschützt wird. Im Gehäuse bzw. im Träger 13 sind ein Antriebsmotor 14 mit Schnecke 15 auf der Ausgangswelle und eine Ausgleichsscheibe 16 sowie eine Zwischenwelle 17 mit zwei Kalottenlagern 18 untergebracht. Außerdem sind im Ausführungsbeispiel drei Hebel 19 auf Lagerachsen 20 drehbar im Träger gelagert. Träger 13 und Deckel 12 sind vorzugsweise formschlüssig miteinander verbunden.

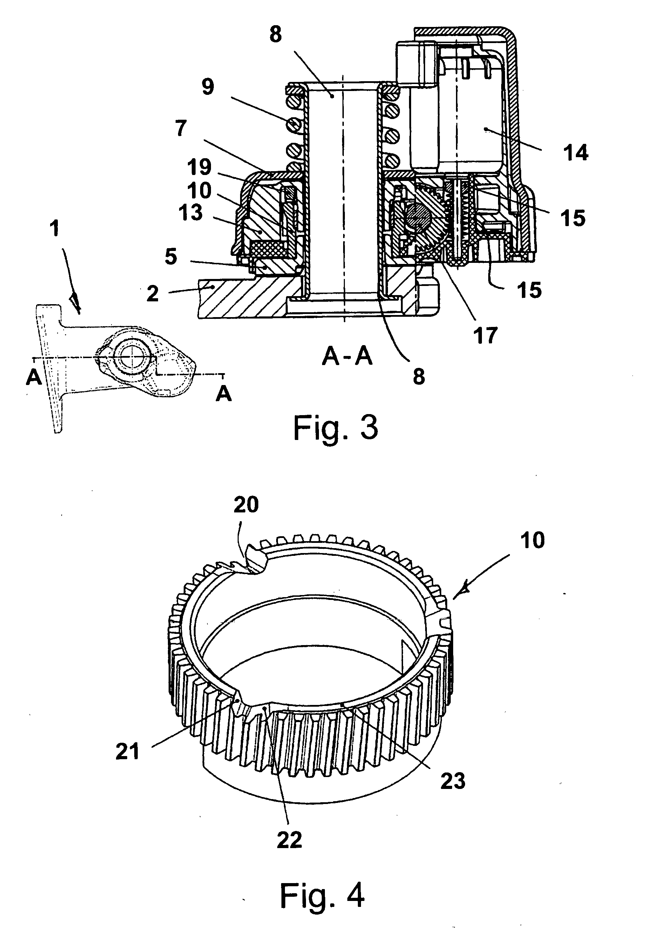

In Fig. 3 ist ein Schnitt durch die Antriebsanordnung im zusammengebauten Zustand dargestellt, wobei die Schnittlinie in der verkleinerten Ansicht der Antriebsanordnung 1 zu sehen ist. Wie zu erkennen ist, weist der Träger 13 einen hülsenförmigen Abschnitt auf, der den Rohrniet 8 umgibt, wobei das Antriebszehnrad auf dem hülsenförmigen Abschnitt, auf dem das Gleitlager 11 sitzt, gleitet. Abtriebszahnrad 10 und Hebel 19 werden von dem Träger 13 übergriffen. Für eine Bewegung des Spiegelkopfes, d.h. des tragenden Teils des Spiegelkopfes 7 von einer Fahrstellung in eine Park- oder Beiklappstellung treibt der Motor 14 mittels der auf den Motorschaft bzw. die Ausgangswelle aufgepressten Schnecke 15 das Stirnrad der Zwischenwelle 17 an. Die Zwischenwelle 17 hat im weiteren Verlauf ebenfalls eine Schneckenverzahnung, die mit dem Abtriebszahnrad 10 in Eingriff steht. Da das Abtriebszahnrad 10 im Normalfall drehfest mit Spiegelfuß über die Rastscheibe und die korrespondierenden Konturen verbunden und feststehend ist, dreht sich der bewegliche Teil des Antriebs 6 zusammen mit dem tragenden Teils des Spiegelkopfes um das Abtriebszahnrad.

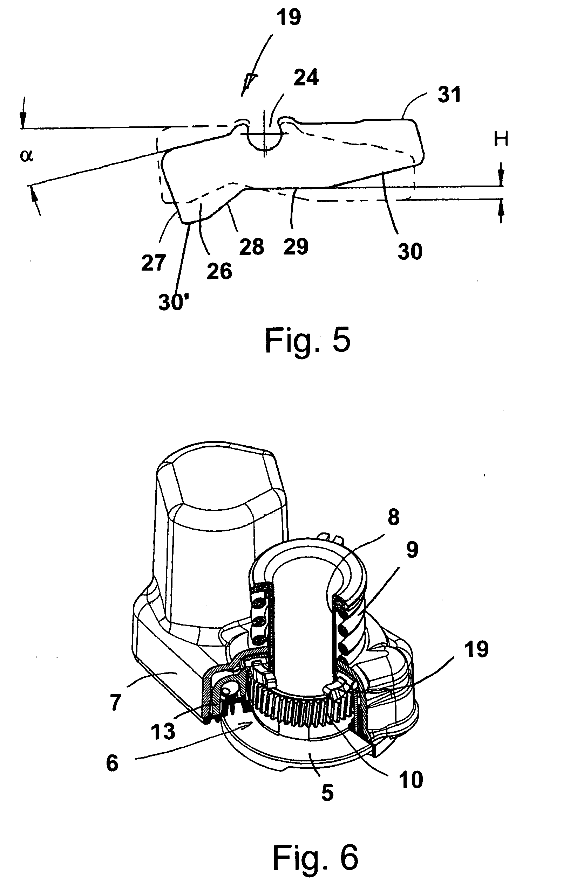

Das Abtriebszahnrad ist näher in Fig. 4 und der Hebel 19 in Fig. 5 dargestellt. Das Abtriebsrad 10 besitzt auf seiner Stirnfläche im Ausführungsbeispiel 3 Rastvertiefungen 20, deren Form grob als V bezeichnet werden kann, wobei die eine Fläche des V-förmigen Profils als Rastfläche 21 und die andere Fläche des V-förmigen Profils eine Rampe 22 bilden, wobei der Anstiegswinkel der Rastfläche 21 steiler als der Anstiegswinkel der Rampe 22 ist. Zwischen den Rastvertiefungen 20 sind Gleitflächen 23 auf der Stirnfläche des Abtriebszahnrads 10 vorgesehen.

In Fig. 5 ist die Seitenansicht eines Hebels 19 dargestellt, und dies in zwei verschiedenen Stellungen, nämlich einer Stellung, in der der Hebel 19 mit der Rastvertiefung in Eingriff ist (durchgezogene Linie) und einer Stellung, in der der Hebel 19 auf der Gleitfläche 23 des Abtriebsrades gleitet. Der Hebel 19 ähnelt in der Seitenansicht einem Schuh und er weist eine teilweise nach außen offene Aufnahmeöffnung 24 für die Lagerachse 25 auf, wobei die Aufnahmeöffnung 24 in Bezug auf die Länge des Hebels 19 außermittig angeordnet ist. Der Hebel 19 ist an seiner zu der Aufnahmeöffnung 24 entgegengesetzten Seite mit einem Absatz versehen, der als Hebelnase 26 bezeichnet wird und der einen Rastvorsprung bildet. Diese Hebelnase 26 greift in der Fahrstellung des Spiegels in die Rastvertiefung 20 ein, wobei sie eine gerade Rastfläche 27 aufweist, die im eingerasteten Zustand an der Rastfläche 21 der Rastvertiefung 20 anliegt. Der Hebel 19 hat auf der der Öffnung 24 abgewandten Seite einen Einschnitt, ähnlich einem Fußgewölbe, wobei ein Abschnitt 28 des Einschnitts an der Rampe 22 anliegt und ein anderer Abschnitt 29 im eingerasteten Zustand auf der Gleitfläche 23 des Abtriebsrades 10 aufliegt. Ein weiterer Teil des Hebels 19, der im Bild des "Schuhs" der Sohle entspricht, bildet eine Gleitfläche 30 für den Beiklappvorgang. Zwischen Rastfläche 27 und Abschnitt 28 ist eine weitere Gleitfläche 30' für den Beiklappvorgang angeordnet. Entgegengesetzt zur Gleitfläche 30 weist der Hebel eine Anschlagfläche 31 zum Abstützen an dem Träger 13 auf.

Die Aufgabe der Hebel 19 besteht darin, einerseits den beweglichen Teil des Antriebs 6 zusammen mit dem tragenden Teil 7 des Spiegelkopfes und somit den Spiegelkopf selbst zu Beginn des Beiklappvorgangs in die Parkstellung anzuheben und andererseits dienen sie als begrenzendes Element oder auch Anschlag, um beim Ausklappvorgang den Spiegelkopf in der Fahrstellung anzuhalten. Dabei kann die Funktionsweise der Hebel 19 als solche wie Ratschenklinken bezeichnet werden.

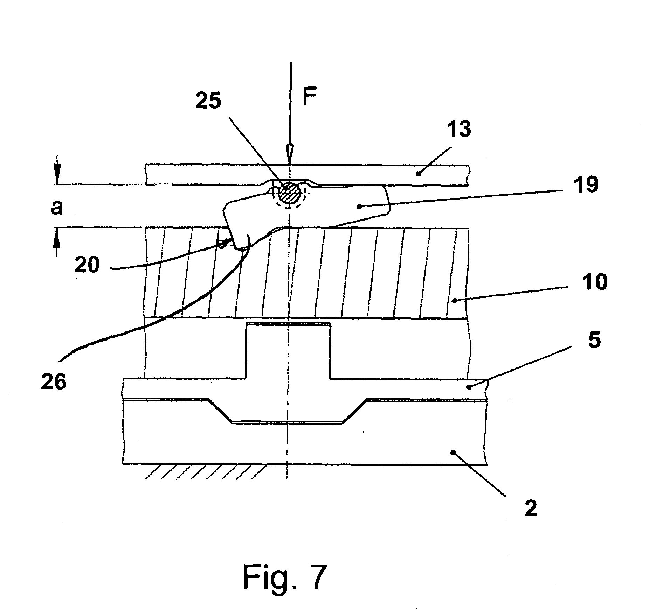

In Fig. 6 und Fig. 7 ist einerseits der Antrieb 6 perspektivisch, teilweise geschnitten in der Fahrstellung gezeigt, während in Fig. 7 dieser Antrieb schematisch in der Stellung gezeigt ist. Die Nase 26 und der Hebel 19 befinden sich in den Rastvertiefungen 20 des Abtriebszahnrades 10, wobei der Hebel 19 mit den Abschnitten 28 und 29 zumindest teilweise auf der Rampe 22 des Abtriebszahnrads und auf der Gleitfläche 23 aufliegen und die jeweiligen Rastflächen 21 der Vertiefung 20 und 27 der Nase 26 einander abstützen und die Anschlagfläche 31 am Träger 13 anliegt. Durch die Federkraft F, die auf den Träger 13 wirkt, werden die Komponenten zusammengepresst und es stellt sich ein Abstand a zwischen Antriebszahnrad 10 und Träger 13 ein. Elektrisch lässt sich der Träger 13 von dieser Stellung aus nur in eine Richtung drehen, nämlich in die Richtung, in der die Hebelnasen 26 an den Rampen 22 im Abtriebszahnrad 10 nach oben fahren, was die Beiklapprichtung ist. In der anderen Richtung ist die Rast- oder Anschlagfläche 21 zu steil und der Hebel 19 verhindert eine Bewegung.

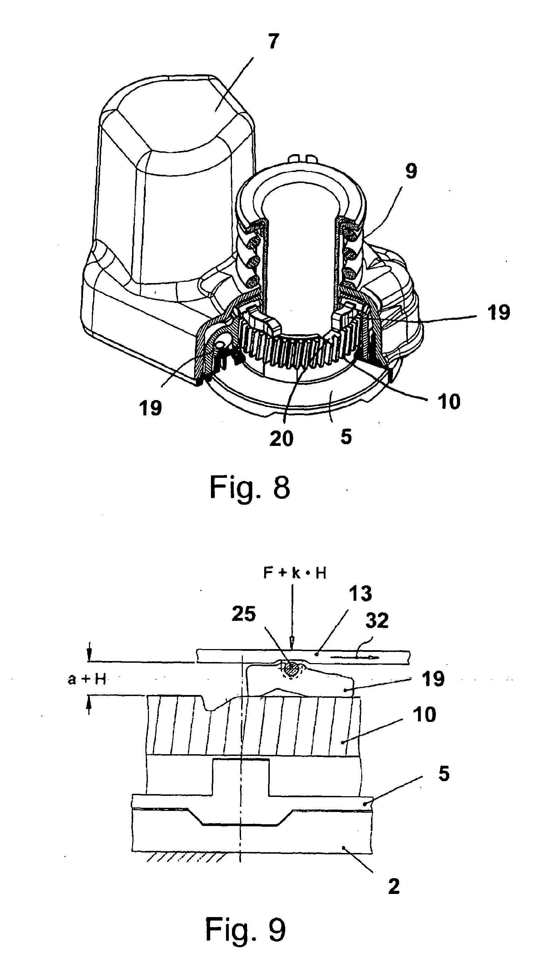

In den Fign. 8 und 9 ist die Antriebsanordnung in perspektivischer, teilweise geschnittener Darstellung, und als Schema beim Beiklappen, d.h. beim Überführen in die Parkstellung gezeigt. Für das Beiklappen wird der Motor 14 mit Strom versorgt und dreht über die Motorschnecke 15, die Zwischenwelle 17 und das Zahnrad 10 den beweglichen Teil des Antriebs 6, d.h. den Träger zusammen mit der Motor- und Getriebeanordnung sowie den tragenden Teil 7 des Spiegelkopfes um das stillstehende Abtriebszahnrad 10. Da die Hebel 19 über die Lagerachsen 25 mit dem Träger 13 verbunden sind werden die Lagerachsen 25 mit dem Hebel 19 entsprechend der in Fig. 9 angedeuteten Bewegungsrichtung 32 des Trägers 13 mitgenommen, wobei die Nasen 26 der Hebel 19 an den Rampen 22 der Rastvertiefungen 20 nach oben fahren und der Abschnitt 28 beim Hochfahren eine Gleitfläche bildet. Die auf den Abschnitt wirkende Normalkraft ist aufgrund der Hebelwirkung reduziert.

Sind die Hebelnasen 26, wie in den Fign. 8 und 9 dargestellt, vollständig über die Rampen 22 nach oben gedrückt worden, ist der bewegliche Teil des Antriebs bzw. der Spiegelkopf vollständig angehoben. Zwischen den beiden Stellungen entsprechend Fig. 7 und Fig. 9 dreht sich der jeweilige Hebel 19 und einen Winkel α, der ca. 15° beträgt, um die Lagerachse 25. Die zwei Stellungen der Hebel 19 sind in Fig. 5 zu erkennen und der Abstand a (Fig. 7) zwischen Träger 13 und Antriebszahnrad 10 vergrößert sich um die mit dem Schwenken und Herausfahren des Hebels 19 einhergehende Hebelhöhe H, wie in Fig. 5 und Fig. 9 zu sehen ist. Durch das Herausfahren wird die Druckfeder zusammengepresst und die Federkraft F der Druckfeder 9 erhöht sich um k·H, wobei k die Federsteifigkeit der Feder ist. Wie aus Fig. 5 zu erkennen ist, ist die Lagerachse 25 annähernd mittig zwischen der Nase 26 und dem Punkt zwischen Abschnitt 29 und der Gleitfläche 30 (Schwenkpunkt) der Hebel 19, so dass sich eine Übersetzung ergibt und die Lagerachse 25 sich annähernd halb soviel hebt wie die Hebelnase 26. Dadurch ergibt sich trotz geringer Hebelhöhe H eine ausreichend große Überdeckung der Rastflächen 21 und 27 jeweils der Rastvertiefungen 20 und der Hebel 19, d.h. die Überdeckung ist etwa doppelt so groß wie Hebelhöhe H. Umgekehrt verhält es sich bei den wirkenden Kräften, d.h. den Kräften, die zu Beginn der Beiklappbewegung überwunden werden müssen. Da der Hebel 19 sich mit seinen Abschnitten 28, 29 auf dem Abtriebszahnrad 10 abstützt, wirkt auf die Hebelnasen 26 jeweils nur annähernd die halbe Federkraft. Dadurch ist es möglich, trotz eines relativ steilen Rampenwinkels das für das Anfahren benötigte Antriebsmoment gering zu halten.

Nachdem die Hebelnasen 26 aus den Rastvertiefungen 20 herausgefahren sind, wobei der Hebel auch um den Schwenkpunkt dreht, gleitet der Hebel 19 mit seiner Gleitfläche 30 und 30' der Hebelnase 26 auf der Gleitfläche 23 des Abtriebszahnrads 10, wobei die Drehung des Spiegelkopfes vom Antrieb 6 her in Beiklapprichtung unbegrenzt ist. Um den Elektromotor 14 anzuhalten wird die Beiklappbewegung durch einen nicht näher dargestellten Anschlag vom Spiegelfuß 2 begrenzt, d.h. der Motor schaltet bei Erhöhung des Stroms aufgrund eines höheren Drehmoments ab.

Wenn der Spiegelkopf wieder aus der Parkposition in die Fahrposition gebracht wird, wird der Elektromotor 14 aktiviert und der bewegliche Teil des Antriebs, d.h. der Träger 13, dreht sich in entgegengesetzter Richtung zu der Bewegung 32, wodurch die Hebel 19 auf der Gleitfläche 23 des Abtriebszahnrads 10 so lange gleiten, bis die Ausklappbewegung durch das Einrasten der Hebelnasen 26 in die Rastvertiefungen 20 und durch die Anschlag- bzw. Rastflächen 21 begrenzt wird. Die außermittige Anordnung der Lagerachse 25 in der Aufnahmeöffnung 24 unterstützt das "Einfallen" der Nase 26 in die Rastvertiefung 20.

## Patentansprüche

1. Antriebsanordnung (1) für einen Außenrückspiegel eines Fahrzeugs zum Bewegen eines Spiegelkopfes relativ zu einem mit dem Fahrzeug verbundenen Spiegelfuß (2) aus einer Fahrstellung in eine Parkstellung und umgekehrt, umfassend:
einen mit dem Spiegelfuß (2) verbindbaren feststehenden Teil (5) und
einen mit dem Spiegelkopf verbindbaren, um eine
Drehachse beweglichen Teil (13),
einen Antrieb (6) zum Ausführen der Bewegung zwischen dem feststehenden und beweglichen Teil,
der zumindest einen Elektromotor (14) und ein mit diesem in Wirkverbindung stehendes Zahnrad (10) aufweist, und
Mittel zum Abheben des beweglichen Teils (13) von dem feststehenden Teil (5),
**dadurch gekennzeichnet,**
**dass** die Mittel zum Abheben mindestens eine auf der Stirnfläche des Zahnrades (10) angeordnete Rastvertiefung (20) und mindestens ein Gleitelement (19) aufweist, wobei das Gleitelement (19) an dem beweglichen Teil (13) schwenkbar angeordnet ist und einen Rastvorsprung (26) für den Eingriff in die Rastvertiefung (20) und eine Gleitfläche (30) zum relativen Bewegen auf der Stirnfläche (23) des Zahnrades (10) umfasst.

2. Antriebsanordnung nach Anspruch 1, **dadurch gekennzeichnet, dass** das mindestens eine Gleitelement (19) als am beweglichen Teil (13) mittels einer Lagerachse (25) schwenkbar befestigter Hebel (19) ausgebildet ist.

3. Antriebsanordnung nach Anspruch 1 oder Anspruch 2, **dadurch gekennzeichnet, dass** das mindestens eine Gleitelement ausgebildet ist, dass es zur Festlegung des Spiegelkopfes in der Fahrstellung mit dem Rastvorsprung (26) in die Rastvertiefung (20) eingreift und dass es zum Abheben des beweglichen Teils (13) von dem feststehenden Teil, bei dem der Antrieb den beweglichen Teil um das Zahnrad (10) dreht, um die Lagerachse (25) um einen vorgegebenen Winkel schwenkt und der Rastvorsprung (26) aus der Rastvertiefung (20) herausfährt.

4. Antriebsanordnung nach einem der Ansprüche 1 bis 3, **dadurch gekennzeichnet, dass** der bewegliche Teil einen die Stirnfläche (23) des Zahnrads übergreifenden Träger (13) und eine Druckfeder (9) zum Aufbringen einer Vorspannkraft auf den Träger (13) und das Zahnrad (10) aufweist , wobei beim Herausfahren des Rastvorsprungs (26) aus der Rastvertiefung (20) des Zahnrads (10) und Abheben des beweglichen Teils vom feststehenden Teil die Druckfeder zusammendrückt und ihre Federkraft erhöht wird.

5. Antriebsanordnung nach einem der Ansprüche 1 bis 4, **dadurch gekennzeichnet, dass** das als Hebel (19) ausgebildete Gleitelement auf seiner der Stirnfläche (23) des Zahnrades (10) zugewandten Seiten mindestens eine Gleitfläche (30, 30') aufweist, die nach Herausfahren des Rastvorsprungs (26) aus der Rastvertiefung (20) auf der Stirnfläche (23) des Zahnrades zum Überführen des Spiegelkopfes in die Parkstellung gleitet.

6. Antriebsanordnung nach einem der Ansprüche 1 bis 5, **dadurch gekennzeichnet, dass** das als Hebel (19) ausgebildete Gleitelement auf seiner zum Zahnrad 10 entgegengesetzten Seite eine Anschlagfläche (31) für das Abstützen an dem beweglichen Teil aufweist, wenn sich der Rastvorsprung (26) in der Rastvertiefung (20) befindet.

7. Antriebsanordnung nach einem der Ansprüche 1 bis 6, **dadurch gekennzeichnet, dass** durch Wahl der Anordnung der Position der Lagerachse (26) des als Hebel (19) ausgebildeten Gleitelements in Bezug auf den Rastvorsprung (26) und die Gleitfläche (30) die Abhebehöhe bestimmbar ist.

8. Antriebsanordnung nach einem der Ansprüche 1 bis 7, **dadurch gekennzeichnet, dass** die mindestens eine Rastvertiefung (20) im Wesentlichen V-förmig ausgebildet ist, wobei die eine Fläche des V-förmigen Profils steiler ist als die andere Fläche des V-förmigen Profils und eine als Anschlag dienende Rastfläche (21) bildet, wobei die weniger steile Fläche als Rampe (22) für das Herausfahren des Rastvorsprungs (26) aus der Rastvertiefung (20) dient.

9. Antriebsanordnung nach einem der Ansprüche 1 bis 8, **dadurch gekennzeichnet, dass** in der Stirnfläche des Zahnrads (10) drei Rastvertiefungen (20) angeordnet sind und dass drei als Hebel (19) ausgebildete Gleitelemente schwenkbar am beweglichen Teil (13) gelagert sind.

## Claims

1. Drive assembly (1) for an external rear mirror in a vehicle, for moving a mirror head relative to a mirror foot (2), which is connected to the vehicle, from a driving position into a parking position, and vice versa, comprising:
a fixed part (5) which is connectable to the mirror foot (2), and
a part (13) which is connectable to the mirror head and is moveable about an axis of rotation,
a drive (6) for implementing the movement between the fixed part and the movable part, said drive having at least one electric motor (14) and a gear wheel (10) which is operatively connected thereto,
and
means for lifting off the movable part (13) from the fixed part (5),
**characterized in that** the lifting-off means has at least one latching depression (20) arranged on the end surface of the gear wheel (10) and at least one sliding element (19), wherein the sliding element (19) is arranged pivotably on the movable part (13) and comprises a latching projection (26) for engagement in the latching depression (20) and
a sliding surface (30) for the relative movement on the end surface (23) of the gear wheel (10).

2. Drive assembly according to Claim 1, **characterized in that** the at least one sliding element (19) is designed as a lever (19) which is fastened pivotably to the movable part (13) by means of a bearing spindle (25).

3. Drive assembly according to Claim 1 or Claim 2, **characterized in that** the at least one sliding element is designed in such a manner that, in order to fix the mirror head in the driving position, said sliding element engages in the latching depression (20) by means of the latching projection (26), and that, in order to lift off the movable part (13) from the fixed part, during which the drive rotates the movable part about the gear wheel (10), said sliding element pivots by a predetermined angle about the bearing spindle (25) and moves the latching projection (26) out of the latching depression (20).

4. Drive assembly according to one of Claims 1 to 3, **characterized in that** the movable part has a carrier (13) engaging over the end surface (23) of the gear wheel, and a compression spring (9) for applying a prestressing force to the carrier (13) and the gear wheel (10), wherein, when the latching projection (26) moves out of the latching depression (20) of the gear wheel (10) and lifts off the movable part from the fixed part, the compression spring is compressed and the spring force thereof is increased.

5. Drive assembly according to one of Claims 1 to 4, **characterized in that** the sliding element which is designed as a lever (19) has, on the sides thereof facing the end surface (23) of the gear wheel (10), at least one sliding surface (30, 30') which, after the latching projection (26) moves out of the latching depression (20), slides on the end surface (23) of the gear wheel in order to transfer the mirror head into the parking position.

6. Drive assembly according to one of Claims 1 to 5, **characterized in that** the sliding element which is designed as a lever (19) has, on the side thereof opposite the gear wheel (10), a stop surface (31) for support on the movable part when the latching projection (26) is in the latching depression (20).

7. Drive assembly according to one of Claims 1 to 6, **characterized in that** the lift-off height is determinable by selection of the arrangement of the position of the bearing spindle (25) of the sliding element, which is designed as a lever (19), with respect to the latching projection (26) and the sliding surface (30).

8. Drive assembly according to one of Claims 1 to 7, **characterized in that** the at least one latching depression (20) is of substantially V-shaped design, wherein the one surface of the V-shaped profile is steeper than the other surface of the V-shaped profile and forms a latching surface (21) which serves as a stop, wherein the less steep surface serves as a ramp (22) for moving the latching projection (26) out of the latching depression (20).

9. Drive assembly according to one of Claims 1 to 8, **characterized in that** three latching depressions (20) are arranged in the end surface of the gear wheel (10), and **in that** three sliding elements designed as levers (19) are mounted pivotably on the movable part (13).

## Revendications

1. Agencement d'entraînement (1) pour un rétroviseur extérieur d'un véhicule, pour déplacer une tête de rétroviseur par rapport à un pied de rétroviseur (2) connecté au véhicule depuis une position de conduite dans une position de stationnement et inversement, comprenant :
une partie fixe (5) pouvant être connectée au pied de rétroviseur (2) et
une partie (13) mobile autour d'un axe de rotation, pouvant être connectée à la tête de rétroviseur,
un entraînement (6) pour effectuer le mouvement entre la partie fixe et la partie mobile, qui présente au moins un moteur électrique (14) et une roue dentée (10) en liaison fonctionnelle avec celui-ci, et
des moyens pour soulever la partie mobile (13) de la partie fixe (5),
**caractérisé en ce que**
les moyens pour soulever présentent au moins un renfoncement d'encliquetage (20) disposé sur la face frontale de la roue dentée (10) et au moins un élément de glissement (19), l'élément de glissement (19) étant disposé de manière pivotante sur la partie mobile (13) et comprenant une saillie d'encliquetage (26) pour l'engagement dans le renfoncement d'encliquetage (20) et une face de glissement (30) pour le déplacement relatif sur la face frontale (23) de la roue dentée (10).

2. Agencement d'entraînement selon la revendication 1, **caractérisé en ce que** l'au moins un élément de glissement (19) est réalisé sous forme de levier (19) fixé pouvant pivoter sur la partie mobile (13) au moyen d'un axe de palier (25).

3. Agencement d'entraînement selon la revendication 1 ou la revendication 2, **caractérisé en ce que** l'au moins un élément de glissement est réalisé de telle sorte qu'il vienne en prise avec la saillie d'encliquetage (26) dans le renfoncement d'encliquetage (20) pour la fixation de la tête de rétroviseur dans la position de conduite, qu'il pivote autour de l'axe de palier (25) suivant un angle prédéfini pour soulever la partie mobile (13) de la partie fixe, l'entraînement faisant tourner la partie mobile autour de la roue dentée (10), et que la saillie d'encliquetage (26) ressorte du renfoncement d'encliquetage (20).

4. Agencement d'entraînement selon l'une quelconque des revendications 1 à 3, **caractérisé en ce que** la partie mobile présente un support (13) venant en prise par-dessus la face frontale (23) de la roue dentée, et un ressort de compression (9) pour appliquer une force de précontrainte au support (13) et à la roue dentée (10), le ressort de compression étant comprimé et sa force de ressort étant augmentée lors de la sortie de la saillie d'encliquetage (26) hors du renfoncement d'encliquetage (20) de la roue dentée (10) et du soulèvement de la partie mobile de la partie fixe.

5. Agencement d'entraînement selon l'une quelconque des revendications 1 à 4, **caractérisé en ce que** l'élément de glissement réalisé sous forme de levier (19) présente sur son côté tourné vers la face frontale (23) de la roue dentée (10), au moins une face de glissement (30, 30'), laquelle glisse sur la face frontale (23) de la roue dentée pour transférer la tête de rétroviseur dans la position de stationnement après la sortie de la saillie d'encliquetage (26) hors du renfoncement d'encliquetage (20).

6. Agencement d'entraînement selon l'une quelconque des revendications 1 à 5, **caractérisé en ce que** l'élément de glissement réalisé sous forme de levier (19) présente sur son côté opposé à la roue dentée (10) une face de butée (31) pour l'appui contre la partie mobile, lorsque la saillie d'encliquetage (26) se trouve dans le renfoncement d'encliquetage (20).

7. Agencement d'entraînement selon l'une quelconque des revendications 1 à 6, **caractérisé en ce que** la hauteur de soulèvement peut être déterminée par le choix de l'agencement de la position de l'axe de palier (25) de l'élément de glissement réalisé sous forme de levier (19) par rapport à la saillie d'encliquetage (26) et à la face de glissement (30).

8. Agencement d'entraînement selon l'une quelconque des revendications 1 à 7, **caractérisé en ce que** l'au moins un renfoncement d'encliquetage (20) est réalisé essentiellement en forme de V, l'une des faces du profilé en V étant plus raide que l'autre face du profilé en V et formant une face d'encliquetage (21) servant de butée, la face moins raide servant de rampe (22) pour la sortie de la saillie d'encliquetage (26) hors du renfoncement d'encliquetage (20).

9. Agencement d'entraînement selon l'une quelconque des revendications 1 à 8, **caractérisé en ce que** trois renfoncements d'encliquetage (20) sont disposés dans la face frontale de la roue dentée (10) et **en ce que** trois éléments de glissement réalisés sous forme de levier (19) sont montés de manière pivotante sur la partie mobile (13).
